# EUROPÄISCHE PATENTSCHRIFT

(11) **EP 0 813 837 B1**
(45) Veröffentlichungstag und Bekanntmachung des Hinweises auf die Patenterteilung: **27.12.2000**
(21) Anmeldenummer: 97250188.6
(22) Anmeldetag: 17.06.1997
(51) Int. Cl.: A47J 47/18, B65D 1/22

(54) **Faltbarer wasserdichter Eimer**
Folding waterproofed bucket
Seau pliable

(30) Priorität: 20.06.1996 DE 29611467 U
(43) Veröffentlichungstag der Anmeldung: 29.12.1997
(73) Patentinhaber: Grimm, Wolfgang, 10709 Berlin (DE)
(72) Erfinder: Grimm, Wolfgang, 10709 Berlin (DE)

(56) Entgegenhaltungen:
- WO-A-91/10608
- FR-A- 2 598 607
- US-A- 1 354 928

## Beschreibung

Faltbarer, wasserdichter Eimer, in einem Stück hergestellt, z.B. aus Kunststoff. Bisherige faltbare Behälter zur Aufnahme von Flüssig- keiten bestehen in der Regel aus dünnen Folien, eventuell aufblasbar und können nur als Kanister zum Transport von Flüssigkeiten verwendet werden. Eimerartige, also oben offene Behälter aus diesen Folien, sind nicht standsicher, bzw. nur standsicher, wenn sie vollkommen gefüllt sind.

Der im Schutzanspruch 1 angegebenen Erfindung liegt das Problem zugrunde, einen faltbaren Eimer zu schaffen, der auch im ungefüllten, teilweise gefüllten und mit anderen Teilen gefüllten Zustand fest steht, und der nach seinem Gebrauch so klein zusammengelegt werden kann, daß er überall platzsparend untergebracht werden kann.

Dieses Problem wurde durch feste Wandungen, durch die eckige Form und die Art der diagonalen Faltung gelöst.

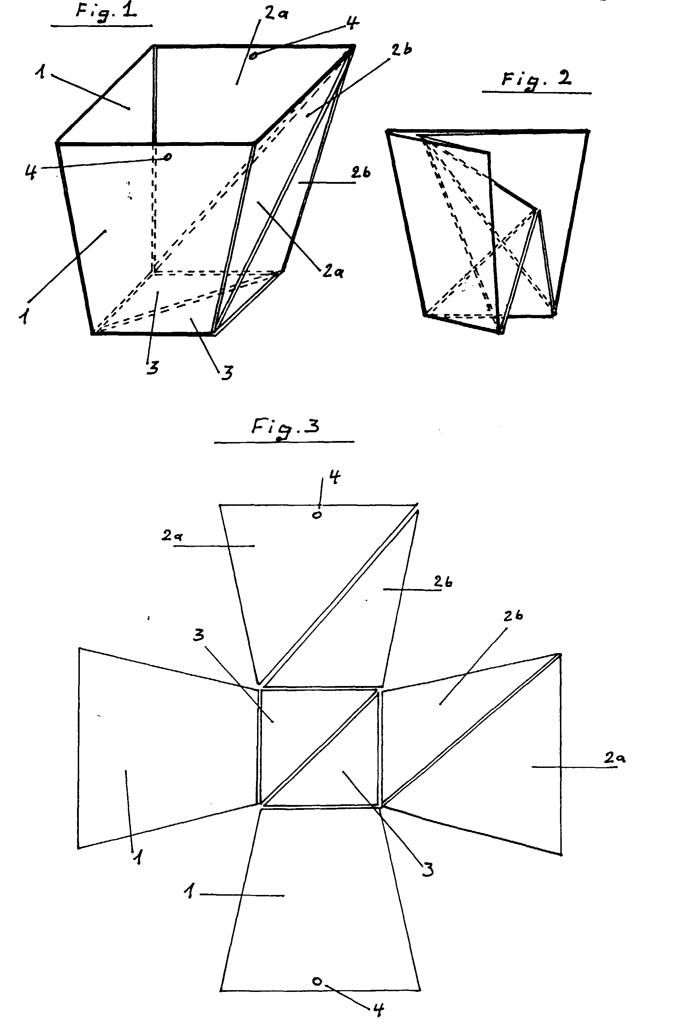

Mit der Erfindung wird erreicht, daß man einen stabilen Eimer hat, ob leer oder gefüllt standsicher ist und zusammengeklappt leicht verstaubar ist. Er soll beim Camping, im Auto (Autowäsche), im Campingwagen, in kleinen Küchen, Büros also überall wo wenig Platz ist, Verwendung finden. Die Ausführung der Erfindung wird anhand der Figur 1 bis 3 erläutert. Es zeigt:
Fig. 1 - den aufgeklappten, gebrauchsfertigen Eimer
Fig. 2 - den schon fast flach zusammengelegten Eimer und wie er nach innen gefaltet wird
Fig. 3 - als Explosionszeichnung, wie die durch Sicken verbundenen Seitenteile angeordnet sind.

In den Figuren ist der Eimer mit zwei eintiligen Wandungen (1), den faltbaren Wandungen (2a und 2b) und die faltbare Bodenplatte (3) dargestellt.
Um den Eimer einzufalten, werden die Teile -2b- nach innen gedrückt. Dabei klappen die Teile -2a- nach außen und der Boden -3- nach oben. Zusammengelegt hat er jetzt die Größe einer Seitenwand.

Als Tragegriff wird ein normaler Metallbügel benutzt, wie er auch bei anderen Kunststoffeimern Verwendung findet. Dieser Bügel kann aus den beiden verstärkten Löchern (4) in den Wandungen herausgenommen werden.

## Patentansprüche

1. Aus einem Stück hergestellter, aus festen Wandungen bestehender, faltbarer, wasserdichter Eimer, dadurch gekennzeichnet,
- daß drei Wandungen zwei Seiten und der Boden faltbar sind (2a, 2b und 3),
- daß der Eimer aus einem Teil mit diagonal eingearbeiteten Sicken in den Seiten (2a) und (2b) und im Boden (3) besteht.

2. Eimer nach Schutzanspruch 1 dadurch gekennzeichnet,
- daß der Eimer im zusammengefalteten Zustand eine Dicke von ca. 2,5 cm aufweist und die Fläche nur der einer Seite entspricht.

## Claims

1. A folding, waterproofed bucket made in a single piece with sturdy sides and base which has the following features;
- three parts of the bucket (two sides and the base) can be folded (2a, 2b and 3),
- the bucket is made in one piece with diagonal beading in sides (2a) and (2b) and in the base (3).

2. In accordance with Claim 1, the bucket has the following features:
- in the folded state the bucket is approx. 2.5 cm thick and has a surface area of only one side piece.

## Revendications

1. Seau pliant étanche à l'eau, constitué de parois solides et fabriqué en une pièce, qui présente les caractéristiques suivantes :
- ce seau est doté de trois parois pliantes - 2 côtés et le fond - (2a, 2b et 3)
- ce seau se compose d'une seule partie dotée de rainures spéciales réalisées en diagonale sur les côtés (2a) et (2b) et le fond (3).

2. Seau conformément à la spécification 1, présentant les caractéristiques suivantes :
- le seau plié a une épaisseur de 2,5 cm env. et sa superficie est égale à celle de l'un des côtés.
